# EUROPEAN PATENT SPECIFICATION

(11) **EP 4 485 563 B1**
(45) Date of publication and mention of the grant of the patent: **11.11.2026**
(21) Application number: 24182385.5
(22) Date of filing: 14.06.2024
(51) Int. Cl.: H01M 4/133, H01M 4/587, H01M 10/052, H01M 10/42, H01M 4/40, H01M 4/02

(54) **NEGATIVE ELECTRODE SHEET AND SCREENING METHOD THEREOF, BATTERY AND ELECTRICAL EQUIPMENT**
NEGATIVELEKTRODENFOLIE UND SCREENINGVERFAHREN DAFÜR, BATTERIE UND ELEKTRISCHE AUSRÜSTUNG
FEUILLE D'ÉLECTRODE NÉGATIVE ET SON PROCÉDÉ DE CRIBLAGE, BATTERIE ET ÉQUIPEMENT ÉLECTRIQUE

(30) Priority: 29.06.2023 CN 202310791450
(43) Date of publication of application: 01.01.2025
(73) Proprietor: Hithium Tech HK Limited, Hong Kong (HK)
(72) Inventor: LEI, Shun, Xiamen, 361100 (CN); ZHANG, Qin, Xiamen, 361100 (CN); FAN, Siqin, Xiamen, 361100 (CN); LIU, Xiaoqing, Xiamen, 361100 (CN)
(74) Representative: Santarelli

(56) References cited:
- EP-A1- 3 614 462
- EP-A1- 3 961 770
- EP-B1- 3 926 713

## Description

### TECHNICAL FIELD

The present disclosure relates to a technical field of electrode materials, and in particular to a negative electrode sheet, a battery, and an electrical equipment.

### BACKGROUND

At present, secondary batteries (such as lithium-ion batteries and sodium-ion batteries) are widely used in electric vehicles, portable mobile devices, aerospace and other fields because of their high energy density, long life, no memory effect, low self-discharge rate and other advantages.

Today's secondary batteries are pursuing higher energy density and rate capability, and the compaction density of the negative electrode sheet is closely related to the energy density of lithium-ion batteries, so the electrode sheet needs to have a high compaction density to ensure the energy density of the battery, but the increase in compaction density will lead to the loss of dynamics. Therefore, how to balance the compaction density and the dynamic relationship of the negative active particles of the negative electrode sheet has become a key problem to be solved.
EP 3 926 713 B1 discloses a secondary battery comprising a negative electrode plate that comprises a negative electrode current collector and a negative electrode film, the negative electrode film comprising a first negative electrode film and a second negative electrode film, the first negative electrode film being disposed on at least one surface of the negative electrode current collector and comprising a first negative electrode active material, and the second negative electrode film being disposed on the first negative electrode film and comprising a second negative electrode active material. The first negative electrode active material comprises natural graphite and satisfies: 6 mΩ·cm ≤ A ≤ 12 mΩ·cm. The second negative electrode active material comprises artificial graphite and satisfies: 13 mΩ·cm ≤ B ≤ 20 mΩ·cm. A is a powder resistivity of the first negative electrode active material tested at a pressure of 8 Mpa and B is a powder resistivity of the second negative electrode active material tested at a pressure of 8 Mpa. The natural graphite constitutes ≥ 50% by mass of the first negative electrode active material and the artificial graphite constitutes ≥ 80% by mass of the second negative electrode active material.
EP 3 614 462 A1 discloses a negative electrode plate and a secondary battery, wherein the negative electrode plate comprising a negative electrode current collector and an negative electrode film coated on at least one surface of the negative electrode current collector and containing the negative active material, wherein the negative electrode plate satisfies 0.6 ≤ 0.7 × P × (D90-D10)/D50+B/3 ≤ 8.0, wherein P refers to the porosity of the negative electrode film; B refers to the active specific surface area of the negative electrode film, and the unit thereof is m²/g; D10 refers to the particle size corresponding to the cumulative volume percentage of the negative active material reaching 10%, D90 refers to the particle size corresponding to the cumulative volume percentage of the negative active material reaching 90%, and D50 refers to the particle size corresponding to the cumulative volume percentage of the negative active material reaching 50%, i.e., the median particle size of the volume distribution, the units of D10, D90 and D50 are all µm. The negative electrode plate can make the secondary battery comprising such negative electrode plate have the characteristics of high energy density, fast charging and long cycle life.

### SUMMARY

Aspects of the present invention are set out in the appended claims. The present disclosure provides a negative electrode sheet and a screening method thereof, a battery and an electrical equipment.

In a first aspect, the present disclosure provides a negative electrode sheet, the negative electrode sheet comprises a current collector and a negative active material layer arranged on the current collector. The negative active material layer comprises negative active particles, and the negative active particles satisfy a relational expression: 0.7≤R50/Dv50≤0.95; therein, R50 is an equivalent average spherical diameter of the negative active particles, and the equivalent average spherical diameter R50 is calculated without counting pores inside the negative active particles, and Dv50 is a corresponding particle diameter when a cumulative volume fraction in a volume-based distribution reaches 50% in the particle diameter distribution measurement by a laser scattering method.

In present disclosure, by controlling a ratio of the equivalent spherical diameter of the negative active particles to a median particle diameter within the above range, the energy density and the dynamic performance of the negative electrode sheet can be controlled to an equilibrium state, so as to obtain a battery with high energy density and long cycle life. When R50/Dv50 exceeds the above range, although the shape of the negative active particles are more regular (more spherical), the dynamic performance of the negative electrode sheet will also decrease, resulting in lower transport efficiency of active ions. When R50/Dv50 is lower than the above range, the shape of the negative active particles are irregular, and the compaction density that can be achieved by the negative electrode sheet will decrease, which is not conducive to the improvement of the battery energy density.

The negative active particle has pores, and the equivalent average spherical diameter R50 of the negative active particles satisfies a relational expression: R50 = √ *(*4*π* × (S1 *- S*2)/*N)*; therein, S1 is an area of a preset region on a plane, S2 is an area of the orthographic projection, of the pores in the preset region, on the plane, and N is a number of the negative active particles in the preset region, wherein the plane is a plane where a cross section of the negative electrode sheet is located, and the preset region is the cross section of the negative electrode sheet, wherein the cross section of the negative electrode sheet is made along a vertical direction of the current collector. In present disclosure, the equivalent spherical diameter calculated by the above equation will not count the pores inside the particle, so that the influence of the internal pores in the particles on spherical diameter R50 can be avoided, so as to fully balance the influence of the irregularity of the particle structure on the compaction density of the material, the rate performance and the cycle performance. Therefore, the negative active particles satisfy the regularity degree of sphericity calculated by the equivalent spherical diameter counted by the above relational expression, the battery assembled with the negative active particles has a small expansion during the cycle, and at the same time, the battery has excellent high temperature cycle and storage performance.

In one embodiment, the equivalent average spherical diameter R50 of the negative active particles satisfy: 1.4µm≤R50≤4.75µm. If the equivalent spherical diameter of the negative active particles is controlled in the above range and the above relational expression is satisfied, the particle diameter Dv50 of the negative active particles can be controlled, so as to ensure that the negative electrode sheet can have appropriate compaction density and battery capacity.

In one embodiment, the particle diameter Dv50 of the negative active particles satisfies: 5µm≤Dv50≤20µm. The median particle diameter of the negative active particle is controlled in the above range can ensure that the negative electrode sheet can have the appropriate compaction density and battery capacity.

In one embodiment, the negative active particles areone or more of graphite, soft carbon, hard carbon, silicon-based compound, and lithium titanate.

In one embodiment, a mass proportion of the negative active particles in the negative active material layer is 90% to 99.5%.

In a second aspect, the present disclosure also provides a screening method for negative electrode sheets, the method comprises: providing a number of negative electrode sheets, each negative electrode sheet comprises a current collector and a negative active material layer arranged on the current collector, the negative active material layer has negative active particles, measuring an equivalent average spherical diameter R50 of the negative active particle, wherein the equivalent average spherical diameter R50 is measured without counting pores inside the negative active particles; measuring a particle diameter Dv50 of the negative active particles, and the Dv50 is the corresponding particle diameter when a cumulative volume fraction in a volume-based distribution reaches 50% in the particle diameter distribution measurement by a laser scattering method; screening out at least one negative electrode sheet with the negative active particles satisfying a relational expression 0.7≤R50/Dv50≤0.95.

Thought the above screening method, the regularity degree of sphericity of the negative active particles are obtained, and the ratio of the equivalent average spherical diameter of the primary particle negative active particle to the median particle diameter of the primary particles is controlled within the above range, thus the energy density and the dynamic performance of the negative active particles can be controlled to an equilibrium state, so as to obtain a battery with high energy density and long cycle life.

In one embodiment, the measuring the equivalent average spherical diameter R50 of primary particles comprises: measuring the equivalent average spherical diameter R50 of the negative active particles comprises: making a cross section along the vertical direction of the current collector, and the cross section of the negative electrode sheet is obtained as a preset region, and an area of the preset region is denoted as S1; projecting the negative active particles in the preset region, and a projection area of the pores in the negative active particle is denoted as S2; calculating the equivalent spherical diameter R50, *R50* = √ *(*4*π* × *(S1 - S*2)/*N), N* is a number of the negative active particles in the preset region.

The equivalent spherical diameter calculated by the above screening method does not count the pores inside the particles, which can avoid the influence of the internal pores in the particles on the spherical diameterR50, so as to fully balance the influence of the irregularity of the particle structure on the compaction density of the material, the rate performance and the cycle performance.

In a third aspect, the present disclosure also provides a battery, the battery comprises electrolyte, a positive electrode sheet, a diaphragm and a negative electrode sheet as described in the first aspect. The positive electrode sheet is at least partially impregnated in the electrolyte; the diaphragm is arranged on one side of the positive electrode sheet and is at least partially impregnated in the electrolyte, and the negative electrode sheet is arranged on one side of the diaphragm away from the positive electrode sheet and is at least partially impregnated in the electrolyte. It is understood that the full technical effects of the negative electrode sheet as described in the first aspect above, are not detailed described here.

In a fourth aspect, the present disclosure also provides an electrical equipment comprising the battery as described in the third aspect above.

### BRIEF DESCRIPTION OF THE ACCOMPANYING DRAWINGS

In order to better describe and illustrate embodiments of the present disclosure or technical schemes in prior arts, the following is a brief introduction of the drawings required to be used in the description of the embodiments or the prior arts. It is obvious that the drawings described below are only some embodiments of the present disclosure. Other drawings can also be obtained from these drawings.,
FIG. 1 illustrates a cross-sectional schematic view of a negative electrode sheet in accordance with one embodiment of the present disclosure;
FIG. 2 illustrates a cross-section view of the negative electrode sheet, photoed by a particle internal pore recognition software in accordance with one embodiment of the present disclosure.
FIG. 3 illustrates a flowchart of a screening method for negative electrode sheets in accordance with one embodiment of the present disclosure.
FIG. 4 illustrates a subflow chart of the step of S33 of Fig. 3 in accordance with one embodiment of the present disclosure.
FIG. 5 illustrates a schematic view of a battery in accordance with one embodiment of the present disclosure.
FIG. 6 illustrates a block view of an electrical equipment in accordance with one embodiment of the present disclosure.

### DETAILED DESCRIPTION OF ILLUSTRATED EMBODIMENTS

The technical solutions in the embodiments of the present disclosure will be clearly and completely described below with reference to the accompanying drawings in the embodiments of the present disclosure. Obviously, the embodiments described below are only part of the embodiments of the present disclosure, but not all embodiments. Based on the embodiments in the present disclosure, all other embodiments obtained by persons of ordinary skill in the art without creative labor shall fall within the scope of protection in the present disclosure.

It should be noted that when a component is said to be "fixed to" another component, it can be directly fixed to the another component or it can also exist in an intermediate component and the component can be indirectly fixed to the another component via the intermediate component. When a component is considered to be "connected to" another component, it may be directly connected to the another component or there may be an intermediate component and the component can be indirectly connected to the another component via the intermediate component.

Unless otherwise defined, all technical and scientific terms used in the present disclosure have the same meaning as those normally understood by persons of ordinary skill in the technical field belonging to the present disclosure. The terms used in the specification in the present disclosure are for the purpose of describing specific embodiments only and are not intended to restrict the present disclosure. The term "and/or" as used in the present disclosure comprises any and all combinations of one or more related listed items.

Some embodiments of the present disclosure are described in detail below with reference to the attached drawings. Where there is no conflict, the following embodiments and the features in the embodiments may be combined.

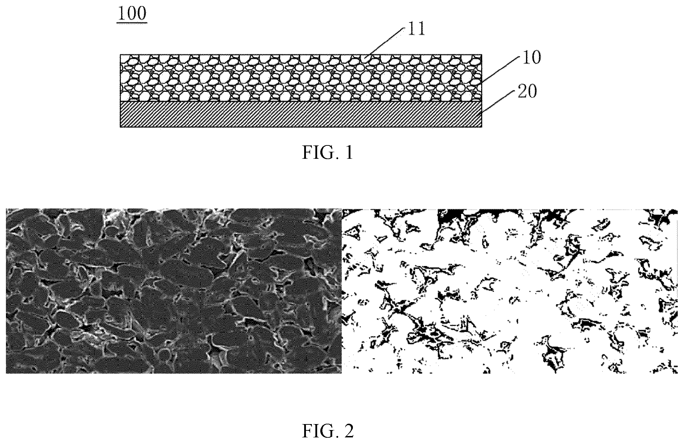

The present disclosure provides a negative electrode sheet 100, as shown in Fig. 1. The negative electrode sheet 100 comprises a current collector 20 and a negative active material layer 10 arranged on the current collector 20. The negative active material layer 10 comprises negative active particles 11, and the negative active particles 11 satisfy a relational expression: 0.7≤R50/Dv50≤0.95; therein, R50 is an equivalent average spherical diameter of the negative active particles, and Dv50 is a corresponding particle diameter when a cumulative volume fraction in a volume-based distribution reaches 50% in a particle diameter distribution measurement by a laser scattering method.

Alternatively, the negative active particles 11 are main structural constitution used to assemble a battery and are used to store active ions (such as lithium ions or sodium ions) from a positive electrode while the battery is in operation. The negative active particles 11 can be carbon-based material particles, silicon-based material particles or metallic inorganic material particles.

Alternatively, the negative active particles 11 may comprise multiple primary particles. To explain, the primary particle should be the smallest active unit in the negative electrode sheet 100. That is, the primary particle is a solid structure that can be observed with an optical or electron microscope. The primary particles in the negative plate may be spherical or spheroid. Alternatively, the negative active particles 11 may comprise secondary particles, each secondary particle is consisted of multiple primary particles.

Alternatively, R50/Dv50 can be, but is not limited to, 0.7, 0.72, 0.74, 0.76, 0.78, 0.8, 0.82, 0.84, 0.86, 0.88, 0.9, 0.92, 0.95.

R50 is an equivalent average spherical diameter of the negative active particles 11. Alternatively, R50 is the equivalent average spherical diameter calculated after eliminating internal pores of the negative active particle.

Dv50 is a corresponding particle diameter of a sample when a cumulative volume fraction in a volume-based distribution of the sample reaches 50%. Its physical meaning is that particles larger than it account for 50%, and particles smaller than it also account for 50%, so Dv50 is also called a median diameter or a median particle diameter of all of the negative active particles 11.

It should be noted that R50/Dv50 can be used to represent a regularity degree of sphericity of the negative active particles 11. When a value of R50/Dv50 is closer to 1, it indicates that the shape of each of the negative active particles is closer to a sphere.

However, the relational expression provided in present disclosure is different from the existing method for calculating the regularity degree of sphericity (which is calculated as the ratio of the surface area of a sphere of the same volume as an object to the surface area of the object). In the present disclosure, the regularity degree of sphericity of negative active particles can be determined by the ratio of the equivalent average spherical diameter to the median particle diameter.

If the battery needs to have a high energy density and rate capability, then the compaction density of the negative electrode sheet has a great relationship with the energy density of the battery. Therefore, the negative electrode sheet needs to have a high compaction density to ensure the energy density of the battery, but the increase of compaction density will lead to the loss of dynamics. In actuality, most of negative active particles are irregularly shaped particles, and the regularity of their shape and the number of defects on the surface will affect the dynamics, compaction density and cycling performance of the negative electrode sheet.

When the negative active particles are more regular and the surface defects are less, the compaction density of the negative electrode sheet is higher and the cycling performance is better. However, when the shape of the negative active particles is irregular and the surface defects of the material including the negative active particles are large, the dynamic behavior of the material is better, but the compaction density of the negative electrode sheet is relatively low. Only when the negative electrode sheet has a suitable compaction density and dynamic performance under suitable conditions, the battery will have a relatively excellent cycle performance and a high energy density.

Therefore, by controlling a ratio of the equivalent average spherical diameter of the negative active particle to the median particle diameter within the above range, the energy density and the dynamic performance of the negative electrode sheet can be controlled to an equilibrium state, so as to obtain a battery with high energy density and long cycle life. When R50/Dv50 exceeds the above range, although the shapes of the negative active particles are more regular (more spherical), the dynamic performance of the negative electrode sheet will decrease, resulting in lower transport efficiency of active ions. When R50/Dv50 is lower than the above range, the shapes of the negative active particles are irregular, and the compaction density that can be achieved by the negative electrode sheet will decrease, which is not conducive to the improvement of the battery energy density.

Alternatively, the regularity degree of sphericity of the negative active particle satisfies a relational expression: 0.75≤R50/Dv50≤0.9.

The negative active particles 11 have pores, and the equivalent average spherical diameter R50 of the negative active particles 11 satisfies a relational expression: R50 = √ *(*4*π* × (S1 *- S2)*/*N)* ; therein, S1 is an area of a preset region on a plane, S2 is an area of the orthographic projection, of the pores in the preset region, on the plane, and N is a number of the negative active particles 11 in the preset region. Therefore, it can be obtained from the relational expression: R50 = √ *(*4*π* × *(S1 - S*2)/*N)* that the equivalent average spherical diameter R50 of each negative active particles 11 is an average value of all of the negative active particles 11 in the preset region. In some embodiments, the regularity degree of sphericity of the negative active particles 11 also can be considered as an average regularity degree of sphericity of all of the negative active particle 11. Wherein the pores comprise pores in the negative active particles and pores between the negative active particles. Wherein each negative active particle has at least one pore or some of the negative active particles each has at least one pore.

The equivalent average spherical diameter R50 can be auxiliary calculated through a SEM (scanning electron microscope) and a particle internal pore recognition software (image processing software).

For example, five fully discharged lithium-ion batteries are provided, the negative electrode sheet of each lithium-ion battery is obtained by disassembling the lithium-ion battery, and then soaked in DMC for 2h and then cleaned and dried. Along a length direction of the negative electrode sheet, with either end as a head, the negative electrode sheet is divided into sections spaced at 5%, 20%, 35%, 50%, 65%, 80%, 95% of the total length of the negative electrode sheet, and each section is horizontally sampled at 10%, 30%, 50%, 70%, 90% of the width of a film surface of the negative electrode sheet to obtain a square negative electrode sheet sample with size of 1 cm x 1 cm. The negative electrode sheet sample comprises a current collector and a negative active material layer arranged on the current collector, and the negative active material layer comprises negative active particles.

Then, a porosity factor of a cross-section of the negative active particles of the negative electrode sheet sample is measured by: first, the negative electrode sheet sample is cut and polished (CP) by argon ion along a direction vertical to the current collector to obtain a cross section of the negative active material layer, then a region of the cross section (preset region) of the negative active material layer to be tested is selected, and then the preset region is photographed and scanned by the scanning electron microscope to obtain at least one photo, a voltage of the scanning electron microscope is set as 5KV (kilovolt) and an image magnification factor of the scanning electron microscope is set as 1000 times. In some embodiments, the current collector is also a sheet, the direction vertical to the current collector means that the direction vertical to the surface, of the current collector, with the largest area.

The photo is then processed by the particle internal pore recognition software (image processing software), which comprises: first, the photo is set as a grayscale image, and then an active substance region of the negative electrode sheet is selected via the software, and upper and lower bound values of the tracking window is adjusted via the software, and the up & down values are 110&40 respectively, then the grayscale is differentiated via the software, and a particle part of the negative active material layer (namely the part of the negative active material layer with the particles) is displayed as a white region, a pore part (namely the part of the negative active material layer with the pore) is displayed as a black region (see Fig. 2), and then an area of the pores in the negative active particles in the entire image is calculated via the software automatically.

It can be understood that, the area of the pores in the negative active particles in the entire image mentioned above is a projection area S2, of the pores in the negative active particles in the preset region, projected on a plane where the preset region is located, namely is the porosity factor of the cross-section of the negative active particles of the negative electrode sheet.

When the battery is in use, there will be a large number of high SOC (State Of Charge) storage and high temperature cycle processes, so the battery needs to have good storage and high temperature cycle performance. Therefore, the battery needs negative active particles with regular shape and fewer surface defects to improve the storage and high temperature cycle performance of the battery.

On the other hand, there will be expansion of the battery during the cycle process, and the expansion of the battery mainly comes from the expansion of li-insertion of the negative electrode. Therefore, when the shape of the negative active particles is more regular and the surface defects are less, the expansion space of the negative active particles in the process of lithium insertion is less. Therefore, the electrical performance of the battery is in contradiction with the expansion rate of the battery.

Therefore, in the present disclosure, the equivalent average spherical diameter calculated by the above equation will not count the pores inside the negative active particles, so that the influence of the internal pores inside the negative active particles on the equivalent average spherical diameter R50 can be avoided, so as to fully balance the influence of the irregularity of the particle structure on the compaction density of the material, the rate performance and the cycle performance. Therefore, if the negative active particles satisfy the diameter above relational expression, the battery assembled with the negative active particles has a small expansion during the cycle, and at the same time, the battery has excellent high temperature cycle and storage performance.

In one embodiment, the equivalent average spherical diameter R50 of the negative active particle is 1.4µm≤R50≤4.75µm, that is, in one embodiment, the equivalent average spherical diameter R50 of the negative active particles is 1.4µm≤R50≤4.75µm.

Alternatively, the equivalent average spherical diameter R50 can be, but is not limited to, 1.4µm, 1.6µm, 1.8µm, 2µm, 2.3µm, 2.6µm, 2.9µm, 3.2µm, 3.6µm, 4µm, 4.5µm, or 4.75µm, as long as the equivalent average spherical diameter of the negative active particle is controlled in the above range and the above relational expression R50 = √ *(*4*π* × (S1 *- S*2)/*N)* is satisfied diameter.

When the equivalent average spherical diameter of the negative active particles is less than the above range, it indicates that the overall diameter of the negative active particles is small, which is not only easy to produce more secondary reactions, but also increases the difficulty of producing the negative active particles, and the negative active particles are easy to unite and not easy to subdivide. When the equivalent average spherical diameter of the negative active particle is larger than the above range, the particle diameter is too large, the storage sites of alkali metal ions are reduced, and the battery capacity is low.

In one embodiment, the negative active particle diameter Dv50 satisfies: 5µm≤Dv50≤20µm.

Alternatively, Dv50 can be, but is not limited to, 5µm, 6µm, 8µm, 10µm, 12µm, 14µm, 16µm, 18µm, 20µm. The median particle diameter of the negative active particles is controlled in the above range to ensure that the negative electrode sheet can have the appropriate compaction density and battery capacity.

When the median particle diameter of the negative active particles is less than the above range, it indicates that the overall diameter of the negative active particles is small, which is not only easy to produce more secondary reactions, but also increases the difficulty of producing the negative active particles, and the negative active particles are easy to unite and not easy to subdivide. When the equivalent average spherical diameter of the negative active particle is larger than the above range, the particle diameter is too large, the storage sites of alkali metal ions are reduced, and the battery capacity is low.

In one embodiment, the negative active particles can be one or more of graphite particles, soft carbon particles, hard carbon particles, silicon-based compounds particles, and lithium titanate particles.

Alternatively, a negative current collector (namely the current collector of the negative electrode sheet) can be one or several types of copper foil, porous copper foil, foam nickel/copper foil, galvanized copper foil, nickel-plated copper foil, carbon-coated copper foil, nickel foil, titanium foil, and carbon-containing porous copper foil. The current collector of the negative electrode sheet alternatively is one or several types of copper foil, galvanized copper foil, nickel-plated copper foil, carbon-coated copper foil.

Alternatively, the negative active material layer also comprises a conductive agent and a bonding agent. Negative slurry is prepared by mixing the negative active particles with the conductive agent and the bonding agent in the solvent, and then the negative slurry was coated on the negative current collector, and the negative electrode sheet 100 is obtained after the negative current collector coated with the negative slurry is dried.

Alternatively, the conductive agent may be at least one of conductive carbon black, acetylene black, graphite, graphene, carbon micro nano wire conductive material, carbon micro nano tubular conductive material.

Alternatively, the bonding agent may be a monomer, polymer or copolymer of acrylonitrile, vinylidene fluoride, vinyl alcohol, carboxymethyl cellulose, lithium carboxymethyl cellulose, sodium carboxymethyl cellulose, methyl acrylyl, acrylic acid, lithium acrylate, acrylamide, amide, imide, acrylic acid, styrene butadiene rubber, sodium alginate, chitosan, glycol or guar gum.

In one embodiment, the thickness of the negative active material layer is 90 µm (micrometre) to 170 µm. Alternatively, the thickness of the negative active material layer can be, but is not limited to, 90 µm, 100 µm, 110 µm, 120µm, 130 µm, 140 µm, 150 µm, 160 µm, 170 µm. By controlling the thickness of the negative active material layer within the above range, it can be ensured that the thickness of the negative electrode sheet is controlled within the appropriate range, and the phenomenon of excessive thickness of the negative electrode sheet will not be caused.

In one embodiment, the mass proportion of negative active particles in the negative active material layer is 90% to 99.5%. Alternatively, the mass proportion of negative active particles in the negative active material layer can be, but not limited to, 90%, 91%, 92%, 93%, 94%, 95%, 96%, 97%, 98%, 99%, 99.5%. By controlling the mass proportion of negative active particles in the negative active material layer within the above range, it can ensure that the negative electrode sheet can have a high energy density.

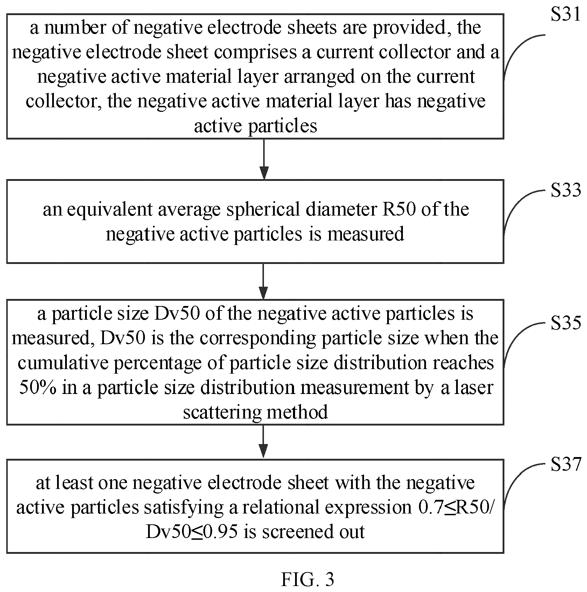

In one embodiment, as shown in Fig. 3, the present disclosure also provides a screening method for negative electrode sheets, the screening method comprises:
S31: a number of negative electrode sheets are provided, the negative electrode sheet comprises a current collector and a negative active material layer arranged on the current collector, the negative active material layer has negative active particles diameter.
S33: an equivalent average spherical diameter R50 of the negative active particles is measured.
S35: a particle diameter Dv50 of the negative active particles is measured, Dv50 is the corresponding particle diameter when a cumulative volume fraction in a volume-based distribution reaches 50% in a particle diameter distribution measurement by a laser scattering method.
S37: at least one negative electrode sheet with the negative active particles satisfying a relational expression 0.7≤R50/Dv50≤0.95 is screened out.

Thought the above screening method, the regularity degree of sphericity of the negative active particles, namely the R50/Dv50 is obtained, and the ratio of the equivalent average spherical diameter of the negative active particles to the median particle diameter is controlled within the above range, thus the energy density and the dynamic performance of the negative active particles can be controlled to an equilibrium state, so as to obtain a battery with high energy density and long cycle life.

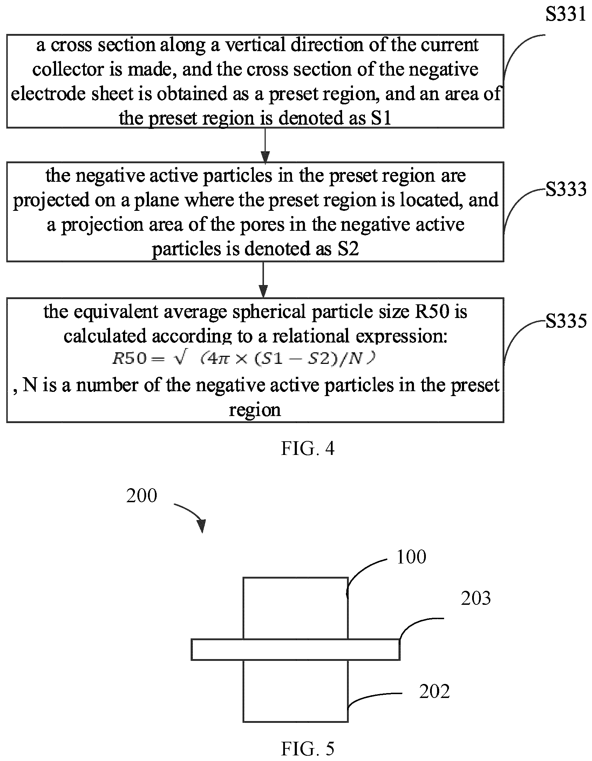

Please refer to Fig. 4, which illustrates a subflow chart of the step of S33 of Fig. 3. In one embodiment, the step S33: the equivalent average spherical diameter R50 of the negative active particles is measured, comprises:
S331: a cross section along a vertical direction of the current collector is made, and the cross section of the negative electrode sheet is obtained as a preset region, and an area of the preset region is denoted as S1.
S333: the negative active particles in the preset region are projected on a plane where the preset region is located, and a projection area of the pores in the negative active particles is denoted as S2.
S335: the equivalent average spherical diameter R50 is calculated according to a relational expression: R50 = √ *(*4*π* × (S1 - *S*2)/*N)*, N is a number of the negative active particles in the preset region.

In detail, the equivalent average spherical diameter R50 of the negative active particle can be calculated by the method provided in the above embodiments and will not be detail described here again.

Please refer to Fig. 5, which illustrates a schematic view of a battery. In one embodiment, the present disclosure also provides the battery 200, the battery 200 comprises electrolyte, a positive electrode sheet 202, a diaphragm 203, and the negative electrode sheet 100 as described above. The positive electrode sheet 202 is at least partially impregnated in the electrolyte; the diaphragm 203 is arranged on one side of the positive electrode sheet 202 and is at least partially impregnated in the electrolyte, and the negative electrode sheet 100 is arranged on one side of the diaphragm 203 away from the positive electrode sheet 202 and is at least partially impregnated in the electrolyte. Therein, the battery 200 can be a lithium ion battery, a sodium ion battery, a potassium ion battery, an aluminum ion battery and so on. The battery 200 provided in the present disclosure has excellent battery rate performance, high energy density and long cycle life due to the usage of the negative electrode sheet 100 of the present disclosure.

Alternatively, the positive electrode material in the positive electrode sheet 202 can be lithium iron phosphate, lithium cobalt oxide, ternary positive electrode material, etc.

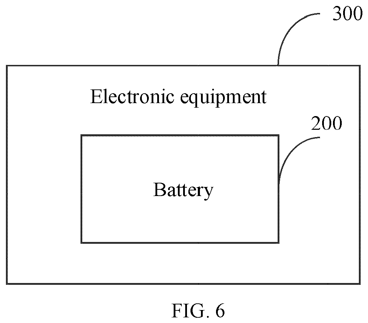

Please refer to Fig. 6, which illustrates a block view of an electrical equipment. In some embodiments, the present disclosure also provides the electrical equipment 300 comprising the battery 200 as described above.

The technical solution of the present disclosure is further explained in combination with embodiments and drawings below.

### Embodiment 1

Graphite particles are produced by: natural flake graphite is crushed, spheroidized and purified to obtain spherical graphite. Therein, the R50 of the spherical graphite is 12.30 µm, the Dv50 of the spherical graphite is 15.4 µm, and the R50/Dv50=0.799.

### Embodiment 2

Graphite particles are produced by: natural flake graphite is crushed, spheroidized and purified to obtain spherical graphite. Therein, the R50 of the spherical graphite is 13.46 µm, the Dv50 of the spherical graphite is 15.2 µm, and the R50/Dv50=0.886.

### Embodiment 3

Graphite particles are produced by: natural flake graphite is crushed, spheroidized and purified to obtain spherical graphite. Therein, the R50 of the spherical graphite is 8.89 µm, the Dv50 of the spherical graphite is 11.7 µm, and the R50/Dv50=0.76.

### Comparison example 1

Graphite particles are produced by: natural flake graphite is crushed, spheroidized and purified to obtain spherical graphite. Therein, the R50 of the spherical graphite is 14.2 µm, the Dv50 of the spherical graphite is 14.5 µm, and the R50/Dv50=0.977.

### Comparison example 2

Graphite particles is produced by: natural flake graphite is crushed, spheroidized and purified to obtain spherical graphite. Therein, the R50 of the spherical graphite is 13.60 µm, the Dv50 of the spherical graphite is 9.2 µm, and the R50/Dv50=0.676.

The negative active particles provided in the above embodiments 1-3 and the negative active particles provided in the comparison examples 1-2 are respectively used to assemble a negative electrode sheet and a lithium-ion secondary battery in the following method:
1) positive electrode sheet is produced by: the positive active material lithium iron phosphate (molecular formula is LiFePO4), the conductive agent acetylene black, and the bonding agent (such as polyvinylidene fluoride (PVDF)) is fully mixed in an appropriate amount of N-methylpyrrolidone (NMP) solvent according to the weight ratio of 96:2:2, thus to form a uniform positive slurry; The positive slurry is coated on a positive collector (such as aluminum foil), the positive collector coated with the positive slurry is dried and cold pressed to obtain the positive electrode sheet.
2) the negative electrode sheet is produced by: negative active particles, a conductive agent, a thickener and a bonding agent are mixed with solvent according to the solid content ratio of 96:1:1:2, thus to obtain negative electrode slurry; a die head extrusion coater is adopted to coat the negative electrode slurry on a negative current collector with conductive coating, and then the negative current collector is dried to obtain an unrolled negative electrode sheet. Then, the negative electrode sheet is rolled according to a designed compaction density through a roller, thus to obtain the negative electrode sheet with a specific thickness.
3) diaphragm is produced by: a PE porous polymer film is taken as the diaphragm.
4) Electrolyte is produced by: ethylene carbonate (EC) and diethyl carbonate (DEC) are mixed according to the volume ratio of 3:7 to obtain a mixed organic solvent, and then a fully dried lithium salt LiPF6 is dissolved in the mixed organic solvent in accordance with the ratio of 1mol/L, and finally the additional 2wt % vinyl fluorocarbonate (FEC) is added to obtain the electrolyte.
5) lithium-ion battery is produced by: the positive electrode sheet, the diaphragm and the negative electrode sheet are stacked in order, so that the diaphragm plays an isolation role between the positive electrode sheet and the negative electrode sheet, and then the positive electrode sheet, the diaphragm and the negative electrode sheet stacked in order are winded to obtain a bare battery; the bare battery is placed in the outer packaging foil, the prepared electrolyte is injected into the bare battery after the bare battery is dried, and the lithium-ion battery is produced completed after vacuum packaging, static placing, formation, shaping and other processes.

The lithium-ion battery produced in the above embodiment 1-3 and comparison example 1-2 are tested by lithium precipitation, and the screening method is as follows:
Ten lithium-ion batteries are selected from each of groups of the lithium-ion batteries of the all embodiments and comparison examples. First, the batteries are placed at 25°C for 1 hour, and then two batteries are grouped in one group, and the batteries in different groups are charged to 3.65 V (volt) at a constant power of 1P, 1.1P, 1.2P, 1.4P, 1.6P, 1.8P, 2P, 2.1P, 2.2P corresponding to different groups, respectively, and then static placed for 30 min), and then discharge them to 2.5V at the constant power of 1P, 1.1P, 1.2P, 1.4P, 1.6P, 1.8P, 2P, 2.1P, 2.2P respectively, and then static placed for 30 min, such charge and discharge are cycled for 10 times, then charge to 3.65 V at 1P, 1.1P, 1.2P, 1.4P, 1.6P, 1.8P, 2P, 2.1P, 2.2P according to corresponding groups, respectively, and then the battery is disassembled and the lithium evolution on the surface of the negative electrode sheet was observed respectively. Wherein the term "P" means a rated power or a discharge power of the battery, and 1P equal to a rated voltage U multiply by a current with 1C (Capacity). 0.5P means that a half of the rated power or the discharge power of the battery, 1.1P means that 1.1 times the rated power or the discharge power of the battery. Wherein the rated voltage U of the lithium iron phosphate battery usually is 3.2V. Wherein for each battery in the corresponding group, the charge power and the discharge power are the same, namely, when one battery is charged at the constant power of 1.1P, the battery is discharged also at the constant power of 1.1P.

The degree of lithium precipitation is determined as: the degree of lithium analysis is determined according to the state of the negative electrode sheet disassembled from the battery after the battery is fully charged, when an area of all of gold and silver gray regions displayed on the negative electrode is < 2%, it is judged to be no lithium precipitation; when the area of all of gold and silver gray regions displayed on the negative electrode is ≥ 2%, it is judged to be lithium precipitation, and the minimum power of lithium precipitation is recorded as the power of lithium precipitation.

It can be understood that, the smaller the power of lithium precipitation, the worse the dynamic performance of the negative electrode sheet.

The lithium-ion battery produced in the above embodiment 1-3 and comparison example 1-2 are tested for cyclic performance, and the screening method is as follows:
Five lithium-ion batteries are selected from each of groups of the lithium-ion batteries of the all embodiments and comparison examples, and are averaged. The lithium-ion batteries are charged and discharged repeatedly via the following steps, and the discharge capacity retention rate of the lithium-ion battery is calculated.

First, for each battery, in the environment of 25°C, a first charge and discharge are carried out, a constant power charging process is performed at 1 P until the upper voltages of the battery are 3.65V, and then a constant voltage charging process is performed, and then a constant power discharging process is performed at 1 P until the final voltage is 2.5V, such charging and discharging processes are performed twice, and the discharge capacity of the second cycle is recorded. Then 3000 charging and discharging cycles are carried out, and the discharge capacity of the 3000th cycle is recorded. 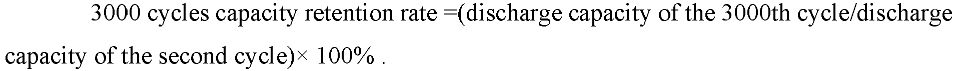 3000 cycles capacity retention rate =(discharge capacity of the 3000th cycle/discharge capacity of the second cycle)× 100% .

The powder compaction density is tested by: a compaction density meter (model LD43.305) is used for testing, a negative powder 1 g (gram) is put into a mold, and the negative powder is subjected to the powder compaction test at a displacement speed of 10mm(millimeter)/min(minute) and a force of 9800 N(Newton), and is maintained at the force of 9800 N for 30 S(second). The powder compaction density after maintaining the force for 30 S is determined as the powder compaction density.

It is understood that the greater the compaction density of the negative powder, the higher the compaction density of the negative electrode sheet when the negative electrode sheet is produced according to the negative powder, so that the battery using the negative electrode sheet has a higher energy density.

The test results are shown in Table 1 below:

**Table 1**

| | R50/Dv50 | Ratio of lithium precipitation (P) | Cyclic performance (3000cls) | Powder compaction density (g/cm3) |
|---|---|---|---|---|
| Embodiment 1 | 0.799 | 2 | 91% | 1.6 |
| Embodiment 2 | 0.886 | 1.6 | 87% | 1.6 |
| Embodiment 3 | 0.760 | 2.2 | 90% | 1.51 |
| Comparison example 1 | 0.977 | 1.2 | 83% | 1.62 |
| Comparison example 2 | 0.676 | 2.2 | 85% | 1.4 |

Through the test results of the above embodiments and comparison examples, it can be directly seen that, if the regularity degree of sphericity of negative active particle is controlled within the range provided in the present disclosure, the cycle performance of batteries made of such negative active particles is higher than that of the comparison examples. This is because the energy density and dynamic performance of the negative electrode sheet in embodiments 1-3 are sufficiently controlled to the equilibrium state, so the battery performance is improved. From the data results of the comparison examples 1 and 2, it can be seen that when the regularity degree of sphericity exceeds the range provided by the present disclosure, the battery cycle performance decreases, and the powder compaction density and lithium precipitation ratio P are too extreme. Therefore, the negative electrode sheet provided in the present disclosure has a relatively excellent performance.

In the description of the embodiments of the present disclosure, it should be noted that the orientation or position relationships of the terms "center", "up", "down", "left", "right", "vertical", "horizontal", "inside", "outside" and other indicators are those based on the attached drawings and only for the purpose of facilitating the description of this application and simplifying the description. Rather than indicating or implying that the device or element referred to must have a particular orientation, be constructed and operate in a particular orientation, it is not to be construed as a limitation of the present disclosure.

The above disclosure is only a better embodiment of this application, of course, can not be used to limit the scope of the claims of this application, ordinary skilled persons in the field can understand all or part of the process of realizing the above embodiment, and the equivalent changes made in accordance with the claims of the present disclosure, still fall within the scope of this application.

## Claims

1. A negative electrode sheet, comprising:
a current collector; and
a negative active material layer arranged on the current collector;
wherein the negative active material layer comprises negative active particles, and the negative active particles satisfy a relational expression: $0.7 \leq R 50 / Dv 50 \leq 0.95$
wherein R50 is an equivalent average spherical diameter of the negative active particles, and the equivalent average spherical diameter R50 is calculated without counting pores inside the negative active particles, and Dv50 is a corresponding particle diameter when a cumulative volume fraction in a volume-based distribution reaches 50% in the particle diameter distribution measurement by a laser scattering method;
wherein the negative active particles have pores, and the equivalent average spherical diameter R50 of the negative active particles satisfies a relational expression: $R 50 = \sqrt{\left(4π\times \left(S1-S2\right)/N\right)}$
wherein S1 is an area of a preset region on a plane, S2 is an area of an orthographic projection of the pores in the preset region on the plane, and N is a number of the negative active particles in the preset region, wherein the plane is a plane where a cross section of the negative electrode sheet is located, and the preset region is the cross section of the negative electrode sheet, wherein the cross section of the negative electrode sheet is made along a vertical direction of the current collector.

2. The negative electrode sheet according to claim 1, wherein the equivalent average spherical diameter R50 of the negative active particles satisfies: 1.4µm ≤ R50 ≤ 4.75µm.

3. The negative electrode sheet according to claim 1, wherein the particle diameter Dv50 of the negative active particles satisfies: 5µm ≤ Dv50 ≤ 20µm.

4. The negative electrode sheet according to claim 1, wherein the negative active particles are selected from one or more of graphite particles, soft carbon particles, hard carbon particles, silicon-based compound particles, and lithium titanate particles.

5. The negative electrode sheet according to claim 1, wherein a mass proportion of the negative active particles in the negative active material layer is 90% to 99.5%.

6. A screening method for negative electrode sheets, comprising:
providing a plurality of negative electrode sheets, each negative electrode sheet comprising a current collector and a negative active material layer arranged on the current collector, the negative active material layer having negative active particles;
measuring an equivalent average spherical diameter R50 of the negative active particles, wherein the equivalent average spherical diameter R50 is measured without counting pores inside the negative active particles;
measuring a particle diameter Dv50 of the negative active particles, and the Dv50 is the corresponding particle diameter when a cumulative volume fraction in a volume-based distribution reaches 50% in the particle diameter distribution measurement by a laser scattering method;
screening out at least one negative electrode plate with the negative active particles satisfying a relational expression: 0.7≤R50/Dv50≤0.95;
wherein measuring the equivalent average spherical diameter R50 of the negative active particles comprises:
making a cross section along a vertical direction of the current collector, and the cross section of the negative electrode sheet is obtained as a preset region, and an area of the preset region is denoted as S1;
projecting the negative active particles in the preset region, and a projection area of the pores in the negative active particles is denoted as S2;
calculating the equivalent average spherical diameter R50 according to a relational expression: $R 50 = \sqrt{\left(4π\times \left(S1-S2\right)/N\right)}$, where N is a number of the negative active particles in the preset region.

7. The screening method according to claim 6, wherein the equivalent average spherical diameter R50 of the negative active particles satisfies: 1.4µm ≤ R50 ≤ 4.75µm

8. The screening method according to claim 6, wherein the particle diameter Dv50 of the negative active particles satisfies: 5µm ≤ Dv50 ≤ 20µm.

9. The screening method according to claim 6, wherein the negative active particles are selected from one or more of graphite particles, soft carbon particles, hard carbon particles, silicon-based compound particles, and lithium titanate particles.

10. A battery, comprising:
electrolyte;
a positive electrode sheet, at least partially impregnated in the electrolyte;
a diaphragm, arranged on one side of the positive electrode sheet and being at least partially impregnated in the electrolyte; and
the negative electrode sheet as claimed in any of claims 1 to 5, the negative electrode sheet is arranged on a side of the diaphragm away from the positive electrode sheet and being at least partially impregnated in the electrolyte.

11. The battery according to claim 10, wherein the battery is a lithium ion battery, a sodium ion battery, a potassium ion battery, or an aluminum ion battery.

12. An electronic equipment, comprising a battery as claimed in any of claims 10 to 11.

## Patentansprüche

1. Negatives Elektrodenblatt, umfassend:
einen Stromabnehmer; und
eine negative aktive Materialschicht, die auf dem Stromabnehmer angeordnet ist;
wobei die negative aktive Materialschicht negative aktive Partikel umfasst, und die negativen aktiven Partikel einen relationalen Ausdruck erfüllen: $0 , 7 \leq R 50 / Dv 50 \leq 0 , 95$
wobei R50 ein äquivalenter durchschnittlicher kugelförmiger Durchmesser der negativen aktiven Partikel ist, und der äquivalente durchschnittliche kugelförmige Durchmesser R50 berechnet wird, ohne Poren innerhalb der negativen aktiven Partikel zu zählen, und Dv50 ein entsprechender Partikeldurchmesser ist, wenn ein kumulativer Volumenanteil in einer volumenbasierten Verteilung 50 % in der Partikeldurchmesserverteilungsmessung durch ein Laserstreuverfahren erreicht;
wobei die negativen aktiven Partikel Poren aufweisen und der äquivalente durchschnittliche kugelförmige Durchmesser R50 der negativen aktiven Partikel einen relationalen Ausdruck erfüllt: $R 50 = \sqrt{\left(4π\times \left(S1-S2\right)/N\right)}$
wobei S1 eine Fläche eines voreingestellten Bereichs auf einer Ebene ist, S2 eine Fläche einer orthografischen Projektion der Poren in dem voreingestellten Bereich auf der Ebene ist, und N eine Anzahl der negativen aktiven Partikel in dem voreingestellten Bereich ist, wobei die Ebene eine Ebene ist, in der sich ein Querschnitt des negativen Elektrodenblatts befindet, und der voreingestellte Bereich der Querschnitt des negativen Elektrodenblatts ist, wobei der Querschnitt des negativen Elektrodenblatts entlang einer vertikalen Richtung des Stromabnehmers erfolgt.

2. Negatives Elektrodenblatt nach Anspruch 1, wobei der äquivalente durchschnittliche kugelförmige Durchmesser R50 der negativen aktiven Partikel Folgendes erfüllt: 1,4 µm ≤ R50 ≤ 4,75 µm.

3. Negatives Elektrodenblatt nach Anspruch 1, wobei der Partikeldurchmesser Dv50 der negativen aktiven Partikel Folgendes erfüllt: 5 µm ≤ Dv50 ≤ 20 µm.

4. Negatives Elektrodenblatt nach Anspruch 1, wobei die negativen aktiven Partikel aus einem oder mehreren von Graphitpartikeln, weichen Kohlenstoffpartikeln, harten Kohlenstoffpartikeln, Partikeln aus siliziumbasierten Verbindungen und Lithiumtitanat-Partikeln ausgewählt sind.

5. Negatives Elektrodenblatt nach Anspruch 1, wobei ein Massenanteil der negativen aktiven Partikel in der negativen aktiven Materialschicht 90 % bis 99,5 % beträgt.

6. Screening-Verfahren für negative Elektrodenblätter, umfassend:
Bereitstellen einer Vielzahl von negativen Elektrodenblättern, wobei jedes negative Elektrodenblatt einen Stromabnehmer und eine negative aktive Materialschicht umfasst, die auf dem Stromabnehmer angeordnet ist, wobei die negative aktive Materialschicht negative aktive Partikel aufweist;
Messen eines äquivalenten durchschnittlichen kugelförmigen Durchmessers R50 der negativen aktiven Partikel, wobei der äquivalente durchschnittliche kugelförmige Durchmesser R50 gemessen wird, ohne Poren innerhalb der negativen aktiven Partikel zu zählen;
Messen eines Partikeldurchmessers Dv50 der negativen aktiven Partikel, wobei der Dv50 der entsprechende Partikeldurchmesser ist, wenn ein kumulativer Volumenanteil in einer volumenbasierten Verteilung 50 % in der Partikeldurchmesserverteilungsmessung durch ein Laserstreuverfahren erreicht;
Aussondern mindestens einer negativen Elektrodenplatte mit den negativen aktiven Partikeln, die einen relationalen Ausdruck erfüllen: $0 , 7 \leq R 50 / Dv 50 \leq 0 , 95 ;$
wobei das Messen des äquivalenten durchschnittlichen kugelförmigen Durchmessers R50 der negativen aktiven Partikel umfasst:
Herstellen eines Querschnitts entlang einer vertikalen Richtung des Stromabnehmers, wobei der Querschnitt des negativen Elektrodenblatts als voreingestellter Bereich erhalten wird und eine Fläche des voreingestellten Bereichs als S1 bezeichnet wird;
Projizieren der negativen aktiven Partikel in den voreingestellten Bereich, wobei eine Projektionsfläche der Poren in den negativen aktiven Partikeln als S2 bezeichnet wird;
Berechnen des äquivalenten durchschnittlichen kugelförmigen Durchmessers R50 nach einem relationalen Ausdruck: $R 50 = \sqrt{\left(4π\times \left(S1-S2\right)/N\right)}$ , wobei N eine Anzahl der negativen aktiven Partikel in dem voreingestellten Bereich ist.

7. Screening-Verfahren nach Anspruch 6, wobei der äquivalente durchschnittliche kugelförmige Durchmesser R50 der negativen aktiven Partikel Folgendes erfüllt: 1,4 µm ≤ R50 ≤ 4,75 µm.

8. Screening-Verfahren nach Anspruch 6, wobei der Partikeldurchmesser Dv50 der negativen aktiven Partikel Folgendes erfüllt: 5 µm ≤ Dv50 ≤ 20 µm.

9. Screening-Verfahren nach Anspruch 6, wobei die negativen aktiven Partikel aus einem oder mehreren von Graphitpartikeln, weichen Kohlenstoffpartikeln, harten Kohlenstoffpartikeln, Partikeln aus siliziumbasierten Verbindungen und Lithiumtitanat-Partikeln ausgewählt sind.

10. Batterie, umfassend:
Elektrolyt;
ein positives Elektrodenblatt, das mindestens teilweise mit dem Elektrolyten durchtränkt ist;
eine Membran, die sich auf einer Seite des positiven Elektrodenblatts befindet und mindestens teilweise mit dem Elektrolyten durchtränkt ist; und
das negative Elektrodenblatt nach einem der Ansprüche 1 bis 5, wobei das negative Elektrodenblatt auf einer Seite der Membran weg von dem positiven Elektrodenblatt angeordnet und mindestens teilweise mit dem Elektrolyten durchtränkt ist.

11. Batterie nach Anspruch 10, wobei die Batterie eine Lithium-Ionen-Batterie, eine Natrium-Ionen-Batterie, eine Kalium-Ionen-Batterie oder eine Aluminium-Ionen-Batterie ist.

12. Elektronische Ausrüstung, umfassend eine Batterie nach einem der Ansprüche 10 bis 11.

## Revendications

1. Feuille d'électrode négative, comportant :
un collecteur de courant ; et
une couche de matériau actif négatif agencée sur le collecteur de courant ;
dans laquelle la couche de matériau actif négatif comporte des particules actives négatives, et les particules actives négatives satisfont à une expression relationnelle : $0 , 7 \leq R 50 / Dv 50 \leq 0 , 95$
dans laquelle R50 est un diamètre sphérique moyen équivalent des particules actives négatives, et le diamètre sphérique moyen équivalent R50 est calculé sans compter de pores à l'intérieur des particules actives négatives, et Dv50 est un diamètre de particule correspondant lorsqu'une fraction volumique cumulée dans une distribution basée sur le volume atteint 50 % dans la mesure de distribution de diamètre de particule par un procédé de diffusion par laser ;
dans laquelle les particules actives négatives présentent des pores, et le diamètre sphérique moyen équivalent R50 des particules actives négatives satisfait à une expression relationnelle : $R 50 = \sqrt{\left(4π\times \left(S1-S2\right)/N\right)}$
dans laquelle S1 est une zone d'une région prédéfinie sur un plan, S2 est une zone d'une projection orthographique des pores dans la région prédéfinie sur le plan, et N est un nombre de particules actives négatives dans la région prédéfinie, dans laquelle le plan est un plan où se trouve une section transversale de la feuille d'électrode négative, et la région prédéfinie est la section transversale de la feuille d'électrode négative, dans laquelle la section transversale de la feuille d'électrode négative est réalisée le long d'une direction verticale du collecteur de courant.

2. Feuille d'électrode négative selon la revendication 1, dans laquelle le diamètre sphérique moyen équivalent R50 des particules actives négatives satisfait à : 1,4 µm ≤ R50 ≤ 4,75 µm.

3. Feuille d'électrode négative selon la revendication 1, dans laquelle le diamètre de particule Dv50 des particules actives négatives satisfait à : 5 µm ≤ Dv50 ≤ 20 µm.

4. Feuille d'électrode négative selon la revendication 1, dans laquelle les particules actives négatives sont choisies parmi une ou plusieurs parmi des particules de graphite, des particules de carbone mou, des particules de carbone dur, des particules de composé à base de silicium et des particules de titanate de lithium.

5. Feuille d'électrode négative selon la revendication 1, dans laquelle une proportion massique des particules actives négatives dans la couche de matériau actif négatif est de 90 % à 99,5 %.

6. Procédé de criblage pour des feuilles d'électrode négative, comportant :
la fourniture d'une pluralité de feuilles d'électrode négative, chaque feuille d'électrode négative comportant un collecteur de courant et une couche de matériau actif négatif agencée sur le collecteur de courant, la couche de matériau actif négatif présentant des particules actives négatives ;
la mesure d'un diamètre sphérique moyen équivalent R50 des particules actives négatives, dans lequel le diamètre sphérique moyen équivalent R50 est mesuré sans compter de pores à l'intérieur des particules actives négatives ;
la mesure d'un diamètre de particule Dv50 des particules actives négatives, et le Dv50 est le diamètre de particule correspondant lorsqu'une fraction volumique cumulée dans une distribution basée sur le volume atteint 50 % dans la mesure de distribution de diamètre de particule par un procédé de diffusion par laser ;
le criblage d'au moins une plaque d'électrode négative avec les particules actives négatives satisfaisant à une expression relationnelle : 0,7≤R50/Dv50≤0,95 ;
dans lequel la mesure du diamètre sphérique moyen équivalent R50 des particules actives négatives comporte :
la réalisation d'une section transversale le long d'une direction verticale du collecteur de courant, et la section transversale de la feuille d'électrode négative est obtenue en tant que région prédéfinie, et une zone de la région prédéfinie est désignée par S1 ;
la projection des particules actives négatives dans la région prédéfinie, et une zone de projection des pores dans les particules actives négatives est désignée par S2 ;
le calcul du diamètre sphérique moyen équivalent R50 selon une expression relationnelle : $R 50 = \sqrt{\left(4π\times \left(S1-S2\right)/N\right)}$, où N est un nombre des particules actives négatives dans la région prédéfinie.

7. Procédé de criblage selon la revendication 6, dans lequel le diamètre sphérique moyen équivalent R50 des particules actives négatives satisfait à : 1,4 µm ≤ R50 ≤ 4,75 µm.

8. Procédé de criblage selon la revendication 6, dans lequel le diamètre de particule Dv50 des particules actives négatives satisfait à : 5 µm ≤ Dv50 ≤ 20 µm.

9. Procédé de criblage selon la revendication 6, dans lequel les particules actives négatives sont choisies parmi une ou plusieurs parmi des particules de graphite, des particules de carbone mou, des particules de carbone dur, des particules de composé à base de silicium et des particules de titanate de lithium.

10. Batterie, comportant :
un électrolyte ;
une feuille d'électrode positive, au moins partiellement imprégnée dans l'électrolyte ;
une membrane, agencée d'un côté de la feuille d'électrode positive et au moins partiellement imprégnée dans l'électrolyte ; et
la feuille d'électrode négative selon l'une quelconque des revendications 1 à 5, la feuille d'électrode négative est agencée d'un côté de la membrane à l'écart de la feuille d'électrode positive et au moins partiellement imprégnée dans l'électrolyte.

11. Batterie selon la revendication 10, dans laquelle la batterie est une batterie lithium-ion, une batterie sodium-ion, une batterie potassium-ion ou une batterie aluminium-ion.

12. Équipement électronique, comportant une batterie selon l'une quelconque des revendications 10 à 11.
